# EUROPEAN PATENT APPLICATION

(11) **EP 4 531 182 A1**
(43) Date of publication of application: **02.04.2025**
(21) Application number: 24156099.4
(22) Date of filing: 06.02.2024
(51) Int. Cl.: H01M 50/244, H01M 50/209, H01M 50/258

(54) **ASSEMBLY FOR BATTERY HOLDER, AND BATTERY HOLDER FOR TRANSPORT VEHICLE**

(71) Applicant: Constellium UK Limited, Burnham, SL1 8DF (GB); Constellium Singen GmbH, 78224 Singen (DE)
(72) Inventor: SCHAEFER, Simon, 78224 Singen (DE); YERBURY, James, Coventry CV36QG (GB)
(74) Representative: Constellium - Propriété Industrielle

(57) **Abstract**

The invention concerns an assembly (10) for battery holder (1) comprising a structural profile (11) extending along a primary direction (X); a connecting node (30) secured to the structural profile (11), and abutting on the structural profile (11) along an interface surface (si30) which is generally plane; and a reinforcing beam (13) comprising at least one connecting enclosure (15), the reinforcing beam (13) being configured to vary configuration between a disassembled configuration (C1) wherein the reinforcing beam (13) is disjoint from the connecting node (30), and an assembled configuration (C2) wherein the connecting node (30) is at least partially inserted inside the connecting enclosure (15) of the reinforcing beam (13).

The invention also concerns a battery holder (1) comprising such an assembly (10), and an electric or hybrid motorized transport vehicle comprising such a battery holder (1).

## Description

### TECHNICAL FIELD OF THE INVENTION

This invention relates to the field of electric or hybrid motorized transport vehicle, and more particularly to a battery holder intended to receive all or part of a battery to be supported by the battery holder.

More particularly, the invention relates to an assembly for such a battery holder.

### BACKGROUND

The state of the art described below presents applications in the field of electric or hybrid vehicles, but it could also relate to other fields or applications requiring the use of a battery holder.

It is known from the state of the art to use a battery enclosure presenting a structural frame designed to support the battery, and eventually to protect the battery cells or modules from damages in the event of impact, or shock and from environmental ingresses. Said battery enclosure generally comprises the following elements:
- a circumferential structural frame usually fastened into the vehicle body structure using a bolting system;
- a floor closing the bottom of the frame and configured to receive all or part of the battery cells or modules;
- a lid made of plastic, steel or aluminum and placed on top of the above structure to seal completely the battery enclosure.

The role of said enclosure is to hold and protect the cells or the modules of the battery. However, depending on the needs, and depending on the type of battery cells or modules intended to be held by the battery holder, the shape for the overall structure of the frame can change drastically. Indeed, the battery system for an electric vehicle is built by a combination of individual cells. Generally, there are three main cell types which can determine the geometry, the size, the range as well as the vulnerability of the energy storage system. Consequently, the type of cells selected will influence the final design and shape of the battery enclosures.

A first main characteristics that a battery enclosure should have is that it needs to be sufficiently robust to reduce the chances of deforming when the vehicle is involved in a miss-use situation or in an accident. For this reason, the battery enclosure must have sufficient strength in order to reduce the chances of damaging internals of the enclosure, which could eventually cause serious damage to the vehicle and its surroundings. To achieve the structural stiffness required, internal parts are used to create a connection between the parts of the structural frame. A typical component which is used in this way is a crossbeam. Those crossbeams allow to house the battery cells or module, along with increasing the overall mechanical resistance of the battery holder.

A second primordial characteristics that a battery enclosure must have is that it must meet standards that are mandatory, such as leak tightness. That is to say that no water or any other debris must penetrate the battery enclosure or enter into it.

A third important technical characteristics that a battery enclosure should have is a light weight, to reduce the overall energy consumption of the vehicle and its cost.

In some applications, there is a need to reduce the overall space of the battery holder. Reducing the size of the battery holder allows to fit in smaller spaces in the vehicles, and may help to reduce the weight of the battery holder, and thus the weight of the vehicle. To this end, it is possible to design a battery holder where individual battery cells or modules are bounded to the enclosure directly. However, such configuration tightened the space constraint, which makes the use for external joining methods based on brackets challenging or impossible. In the case where the battery holder comprises a crossbeam, an approach would be to weld the beams. However, welding has the knock-on effect of introducing tolerance constraints to the outer frame of the enclosure.

Therefore, there is a need to find a solution to increase the space for fitting a maximum number of cells or battery modules without increasing the overall size of the battery holder, while maintaining a good mechanical resistance of the battery holder.

### SUMMARY OF THE INVENTION

The present invention aims at solving the aforementioned problems. To this end, the invention concerns an assembly for battery holder, the battery holder comprising a frame and a floor delimiting between them a housing intended to receive all or part of a battery, the assembly comprising :
- a structural profile intended to form at least one part of the frame of the battery holder, said structural profile extending along a primary direction;
- a connecting node secured to the structural profile, and abutting on the structural profile along an interface surface, said interface surface being generally plane, and sensibly parallel to the primary direction;
- a reinforcing beam comprising at least one connecting enclosure configured to allow the reinforcing beam to slide relative to the connecting node along a sliding direction, the reinforcing beam being configured to vary configuration between a disassembled configuration wherein the reinforcing beam is disjoint from the connecting node, and an assembled configuration wherein the connecting node is at least partially inserted inside the connecting enclosure of the reinforcing beam.

The arrangements described above make it possible to provide an assembly for battery holder where individual batteries can be bonded to the frame of the battery holder directly. Indeed, the fact that the connecting node is inserted inside the connecting enclosure allows both to have a strong connection between the side structural profile and the reinforcing beam, and to increase the package space for batteries without increasing the overall internal perimeter of the frame.

According to an embodiment, the assembly comprises one or more of the following features, taken alone or in combination.

According to one embodiment, the battery intended to be held by the battery holder may be any type of battery, comprising for example: cylindrical cells, prismatic cells, pouch cells and/or battery modules.

According to one embodiment, the primary direction is a longitudinal direction, for example corresponding to the direction in which the electrical vehicle travels.

According to one embodiment, the connecting enclosure is a hollow cavity.

According to one embodiment, at least one element chosen between the reinforcing beam, the structural profile, and the connecting node is a solid profile.

According to one embodiment, the reinforcing beam is extending along a secondary direction sensibly perpendicular to the primary direction, when the reinforcing beam is in the assembled configuration.

Thus, it is possible to house quadrilateral batteries cells or modules inside the housing defined by the frame of the battery holder.

By "sensibly perpendicular", it is meant that an angle formed between the primary direction X and the secondary direction Y is comprised between 85° and 95°.

According to one embodiment, the primary direction X forms an angle with the secondary direction Y comprised between 70° and 110°.

According to one embodiment, the secondary direction is a transversal direction, for example corresponding to a direction perpendicular to the direction in which the electrical vehicle travels.

According to one embodiment, the secondary direction is perpendicular to the primary direction, and to the sliding direction.

According to one embodiment, a distance separating the reinforcing beam from the structural profile when the reinforcing beam is in the assembled configuration, is inferior to 10 mm, preferentially inferior to 2 mm, and notably sensibly equal to 0 mm.

In other words, the reinforcing beam may be in contact with, or close to the structural profile when the reinforcing beam is in the assembled configuration. It is well understood that the reinforcing beam is configured to fit in a length separating two opposite structural profiles of the frame.

According to one embodiment, the distance separating the reinforcing beam from the structural profile when the reinforcing beam is in the assembled configuration, is inferior to 5 mm, and preferentially inferior to 1 mm.

Thus, fixing the reinforcing beam with the structural profile can be achieved without welding. Besides, using shorter gaps for assembling the reinforcing beam with the structural profile allows to have better resistance to crash performances. Indeed, direct welding between the reinforcing beam and structural profiles would require much tighter gap control and can over-constrain the frame structure.

According to one embodiment, the connecting node is totally comprised in a cylinder defined by the reinforcing beam, when the reinforcing beam is in the assembled configuration.

By "cylinder", it is meant a volume delimited by a cylindrical surface. A cylindrical surface is generated by a straight line, called a generator, which moves in a given direction based on a closed curved line called a director. In the present case, the director corresponds to the profile of the cutting section of the reinforcing beam at the level of the connecting enclosure, and the generator is parallel to the secondary direction.

In other words, the connecting node is totally included in the footprint of the connecting enclosure on the structural profile.

According to one embodiment, the connecting node presents externally an external adhesion surface, and wherein the reinforcing beam presents internally an internal adhesion surface facing the external adhesion surface of the connecting node, the assembly comprising further an adhesion element disposed between said external adhesion surface and said internal adhesion surface, said adhesion element being configured to adhere the connecting node to the reinforcing beam at the level of the external adhesion surface and of the internal adhesion surface, when the reinforcing beam is in the assembled configuration.

Thus, the mechanical strength of the assembly is stronger when the reinforcing beam is in the assembled configuration.

Advantageously, using adhesive bounding allows to manufacture assemblies with a greater tolerance for gaps separating the reinforcing beam and the structural profile compared conventional gap compensator like welding process.

According to one embodiment, the adhesive element may comprise one adhesive chosen between epoxy resin, methyl-methacrylate, acrylics, polyurethane, silane terminated polymer or equivalent.

According to one embodiment, the reinforcing beam comprises a connecting end portion comprising at least two walls defining internally the connecting enclosure, said connecting end portion being configured to allow the reinforcing beam to slide relatively to the connecting node.

Thus, sliding of the reinforcing beam around the connecting node is facilitated.

According to one embodiment, the connecting end portion presents internally, an abutment surface on which the connecting node is configured to abut when the reinforcing beam is in the assembled configuration.

Thus, it is possible to block the sliding of the reinforcing beam in the sliding direction.

According to one embodiment, the connecting node presents a support surface facing the abutment surface of the reinforcing beam, the connecting node comprising at least one insertion corner adjacent to said support surface, said at least one insertion corner being roundish.

Thus, insertion of the reinforcing beam at the level of the insertion corner is guided and facilitated.

According to one embodiment, the at least two walls of the connecting end portion comprises a central wall and two opposite lateral side walls extending from the central wall; each lateral side wall comprising a proximal end attached to the central wall, and a distal end opposite to the proximal end.

Thus, the shape of the connecting end portion is adapted to fit with the connecting node.

According to one embodiment, the connecting end portion presents a hollow U shape, a hollow H shape, or a hollow C shape.

According to one embodiment, a distance separating the two opposite side walls at the level of the proximal ends is strictly inferior to a distance separating the two opposite side walls at the level of the distal ends.

Thus, insertion of the reinforcing beam along the sliding direction is facilitated.

In other words, the opposing side wall are slightly tapered.

According to one embodiment, the connecting node comprises two opposite adhesion faces facing the two opposite side walls of the connecting end portion of the reinforcing beam, a distance separating the two opposite adhesion faces at the level of the proximal ends is strictly inferior to a distance separating the two opposite adhesion faces at the level of the distal ends.

In other words, the opposing adhesion faces of the connecting node are slightly tapered.

Synergistically, when the connecting node and the reinforcing beam adhere to one another, this slight tapering allows to avoid the wipe-off of the adhesion element.

According to one embodiment, the connecting node is formed in an extruded profile.

Thus, the manufacturing cost of the connecting node is reduced.

According to one embodiment, at least one element chosen between the structural profile, the connecting node, and the reinforcing beam is made from an aluminum alloy.

According to one embodiment, the assembly comprises at least one fixing element configured to allow securing of the connecting node to the structural profile.

Thus, the mechanical strength of the link between the structural profile and the connecting node is improved.

According to one embodiment, the at least one fixing element is configured to allow a reversible fixing of the connecting node with the structural profile.

According to one embodiment, the at least one fixing element comprises a bolt configured to be fixed to a blind nut provided in the structural profile.

According to one embodiment, the connecting node is secured to the structural profile by at least one bolt.

For example, each bolt can be connected to the structural profile via a sealed blind rivet nut. Said bling rivet nut may be placed in an inner wall of the structural profile. This bolted connection ensures a proper support for load cases where the connecting node is loaded in shear.

Alternatively, each bolt can be connected to the structural profile through a threaded hole arranged through the structural profile via a sealing element, such as a sealing ring. Thus, it is possible to secure the connecting node to the structural profile while maintaining leak tightness.

The object of the invention may also be achieved by implementing a battery holder for a transport vehicle, the battery holder comprising a frame and a floor delimiting between them a housing intended to receive all or part of a battery, said frame comprising at least one assembly as described above.

The object of the invention may also be achieved by implementing an electric or hybrid motorized transport vehicle comprising a battery holder as described above.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
Figure 1 represents an exploded view of a battery holder adapted to house an assembly according to the invention
Figure 2 represents a perspective view of the battery holder of figure 1.
Figure 3 represents a perspective view of an assembly according to one embodiment of the invention in the disassembled configuration.
Figure 4 represents a perspective view of an assembly according to one embodiment of the invention in the assembled configuration.
Figure 5 represents a cross-section view of an assembly according to one embodiment of the invention.
Figure 6 represents different variants of the connections end portion of the reinforcing beam.

### DETAILED DESCRIPTION

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

As illustrated on the figures, the invention concerns an assembly 10 for battery holder 1. The invention also concerns a battery holder 1 for a transport vehicle comprising such an assembly 10. The invention also concerns an electric or hybrid motorized transport vehicle comprising such a battery holder 1.

Generally, a battery holder 1 comprises a frame 2 and a floor 3 delimiting between them a housing intended to receive all or part of a battery. The battery intended to be held by the battery holder 1 may be any type of battery, comprising for example: cylindrical cells, prismatic cells, pouch cells and/or battery modules.

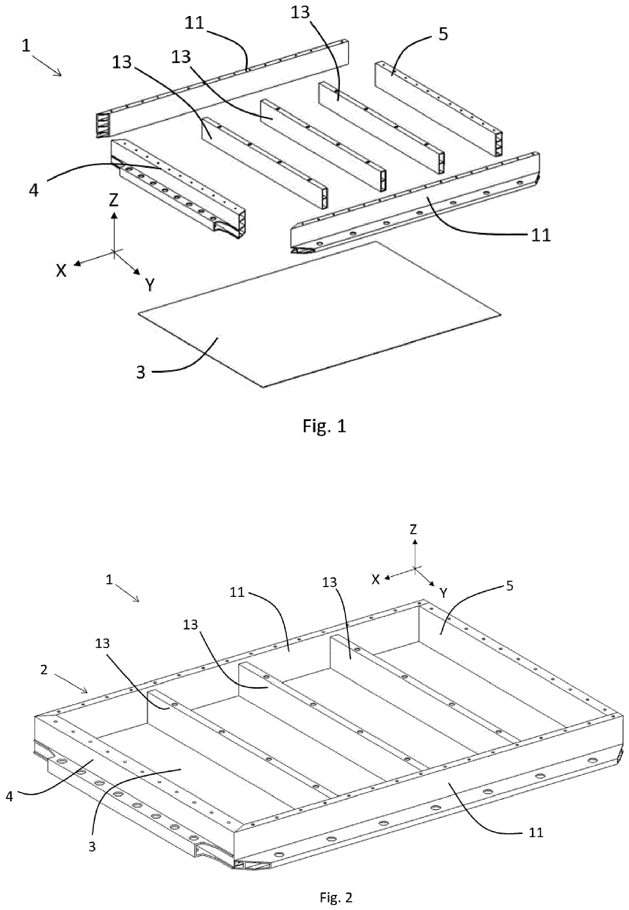

The battery holder 1 comprises generally a lid (not represented), preferentially made of plastic, and connected to the frame 3 so as to close the housing. Figure 1 and 2 illustrates an example of battery holder 1 wherein the frame 2 comprises two lateral structural profiles 11 extending along a primary direction named "X", corresponding to the direction in which the electrical vehicle travels, a front profile 4, and a back profile 5. In this example, the frame 2 has a general quadrilateral shape. However, such shape is non-limiting, and the frame 2 may have any other shape, depending on the battery to be hold. The figures also represent reinforcing beams 13, disposed inside the frame 2, and secured to the two lateral structural profiles 11. The assembly 10 according to the invention is intended to be part of such battery holder 1.

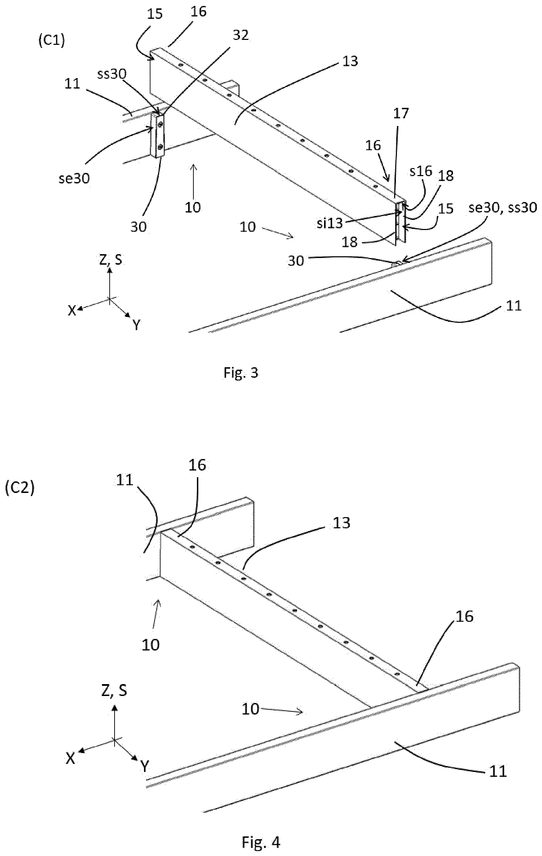

Indeed, the assembly 10 according to the invention, and illustrated on figures 3 to 5, comprises a structural profile 11 intended to form at least one part of the frame 2 of the battery holder 1. Said structural profile 11 extends along a primary direction X. Generally, the primary direction X is a longitudinal direction, for example corresponding to the direction in which the electrical vehicle travels.

The assembly 10 comprises further a connecting node 30 secured to the structural profile 11, and abutting on the structural profile 11 along an interface surface si30. The interface surface si30 is generally plane, and sensibly parallel to the primary direction X.

The assembly 10 also comprises a reinforcing beam 13 comprising at least one connecting enclosure 15, for example a hollow cavity, and configured to allow the reinforcing beam 13 to slide relative to the connecting node 30 along a sliding direction called "S". The reinforcing beam 13 is configured to vary configuration between a disassembled configuration C1 wherein the reinforcing beam 13 is disjoint from the connecting node 30, and an assembled configuration C2 wherein the connecting node 30 is at least partially inserted inside the connecting enclosure 15 of the reinforcing beam 13.

According to one embodiment, at least one element chosen between the reinforcing beam 13, the structural profile 11, and the connecting node 30 is a solid profile. Alternatively, at least one element chosen between the reinforcing beam 13, the structural profile 11, and the connecting node 30 is a hollow profile. Using hollow profiles can be advantageous to reduce the overall weight of the assembly 10. More particularly, the connecting node 30 can be formed in an extruded profile. Thus, the manufacturing cost of the connecting node 30 is reduced. Besides, at least one element chosen between the structural profile 11, the connecting node 30, and the reinforcing beam 13 is made from an aluminum alloy.

As illustrated on figures 3 to 5 the reinforcing beam 13 may extend along a secondary direction called "Y" which is sensibly perpendicular to the primary direction X, when the reinforcing beam 13 is in the assembled configuration C2. Thus, it is possible to house quadrilateral batteries cells or modules inside the housing defined by the frame 2 of the battery holder 1. By "sensibly perpendicular", it is meant that an angle formed between the primary direction X and the secondary direction Y is comprised between 85° and 95°. However, such construction is non-limiting and it is also possible that an angle formed between the primary direction X and the secondary direction Y is comprised between 70° and 110°.

When the secondary direction Y is sensibly perpendicular to the primary direction X, it is possible that the secondary direction Y is a transversal direction, for example corresponding to a direction perpendicular to the direction in which the electrical vehicle travels. Besides, the secondary direction Y can be perpendicular to the primary direction X, and to the sliding direction S. The sliding direction S can be parallel or coincide with a vertical direction called "Z" defined transversal to a plane formed by the primary direction X and the secondary direction, and notably perpendicular to said plane. As a result, it is possible to define a spatial reference associated to the battery holder 1, and for example attached to the floor 5. Said spatial reference may comprises following three axes:
- The primary direction X, intended to extend longitudinally along the traveling direction of the vehicle;
- The secondary direction Y extending laterally in the plane of the floor 5 and generally perpendicular to the axis X;
- The vertical direction Z extending transversely relative to the plane of the floor 5.

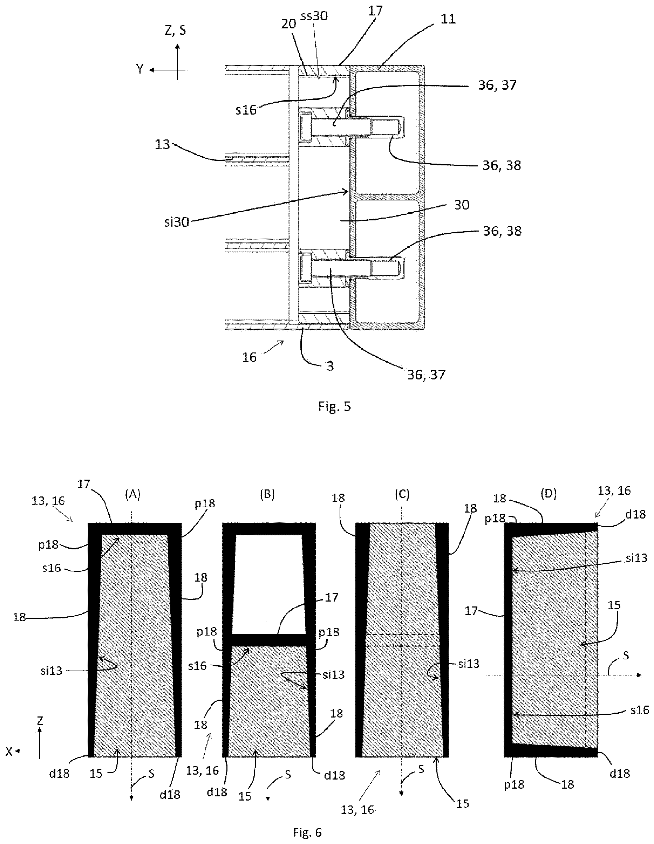

Although the sliding direction S may be perpendicular to the primary direction X as it can be seen on figures 3 to 5 and 6A to 6C, it is also possible that the sliding direction is parallel or coincide with the primary direction X as illustrated in figure 6D.

As illustrated on figures 3 and 4, the reinforcing beam 13 comprises a connecting end portion 16. More particularly, the reinforcing beam 13 may comprise two opposite connection end portions 16, wherein each connection end portion 16 is directed towards respective opposite structural profiles 11. The connecting end portions 16 may comprise at least two walls 17, 18 defining internally the connecting enclosure 15. Said connecting end portion 16 is configured to allow the reinforcing beam 13 to slide relatively to the connecting node 30. Thus, sliding of the reinforcing beam 13 around the connecting node 30 is facilitated.

Figure 6 illustrate different variants showing the cross-section of the connecting end portion 16. Figure 6C depicts a connecting end portion 16 with two lateral side walls 18 extending from the rest of the reinforcing beam 13. Said lateral side walls 18 are offset from each other relative to the sliding direction S, which is extending perpendicularly to the primary direction X and the secondary direction Y.

Figures 6A, 6B and 6D represents connecting end portions 16 wherein the at least two walls 17, 18 of the connecting end portion 16 comprises a central wall 17 and two opposite lateral side walls 18 extending from the central wall 17. Each lateral side wall 18 comprises a proximal end p18 attached to the central wall 17, and a distal end d18 opposite to the proximal end p18. Thus, the shape of the connecting end portion 16 is adapted to fit with the connecting node 30. For example, the connecting end portion 16 may present a hollow U shape (figure 6A), a hollow H shape (figure 6B), or a hollow C shape (figure 6D).

It may be advantageous, that a distance separating the two opposite side walls 18 at the level of the proximal ends p18 is strictly inferior to a distance separating the two opposite side walls 18 at the level of the distal ends d18. In other words, the opposing side wall 18 are slightly tapered. Thus, insertion of the reinforcing beam 13 along the sliding direction S is facilitated.

As depicted on figures 6A and 6B, the connecting end portion 16 may present internally, an abutment surface s16 on which the connecting node 30 is configured to abut when the reinforcing beam 13 is in the assembled configuration C2. Thus, it is possible to block the sliding of the reinforcing beam 13 in the sliding direction S.

It may be advantageous that the connecting node 30 presents a support surface ss30 facing the abutment surface s16 of the reinforcing beam 13, the connecting node 30 comprising at least one insertion corner 32 adjacent to said support surface ss30, said at least one insertion corner 32 being roundish. Thus, insertion of the reinforcing beam 13 at the level of the insertion corner 32 is guided and facilitated.

The connecting node 30 can comprise two opposite adhesion faces facing the two opposite side walls 18 of the connecting end portion 16 of the reinforcing beam 13. Besides it is possible that a distance separating the two opposite adhesion faces at the level of the proximal ends p18 is strictly inferior to a distance separating the two opposite adhesion faces at the level of the distal ends d18. In other words, the opposing adhesion faces of the connecting node 30 are slightly tapered. Thus, the tapering of the adhesion faces cooperates with the tapering of the lateral side walls 18 of the connecting end portion 16. Synergistically, when the connecting node 30 and the reinforcing beam 13 adhere to one another, this slight tapering allows to avoid the wipe-off of an adhesion element 20 described below.

Generally, the connecting node 30 is totally comprised in a cylinder defined by the reinforcing beam 13, when the reinforcing beam 13 is in the assembled configuration C2. By "cylinder", it is meant a volume delimited by a cylindrical surface. A cylindrical surface is generated by a straight line, called a generator, which moves in a given direction based on a closed curved line called a director. In the present case, the director corresponds to the profile of the cutting section of the reinforcing beam 13 at the level of the connecting enclosure 15, and the generator is parallel to the secondary direction Y. In other words, the connecting node 30 is totally included in the footprint of the connecting enclosure 15 of the structural profile 11. A variant of the invention with a connecting end portion 16 as described before, allows the connecting node 30 to be totally comprised tin the footprint of the connecting enclosure 15.

Referring to figure 3 to 5, the connecting node 30 may present externally an external adhesion surface se30, and the reinforcing beam 13 may present internally an internal adhesion surface si13 facing the external adhesion surface se30 of the connecting node 30. In that case, the assembly 10 can comprise an adhesion element 20 disposed between said external adhesion surface se30 and said internal adhesion surface si13. Said adhesion element 20 being configured to adhere the connecting node 30 to the reinforcing beam 13 at the level of the external adhesion surface se30 and of the internal adhesion surface si13, when the reinforcing beam 13 is in the assembled configuration C2. Thus, the mechanical strength of the assembly 10 is stronger when the reinforcing beam 13 is in the assembled configuration C2. Generally, the adhesive element may comprise one adhesive chosen between epoxy resin, methyl-methacrylate, acrylics, polyurethane, silane terminated polymer or equivalent. Advantageously, using adhesive bounding allows to manufacture assemblies 1 with a greater tolerance for gaps separating the reinforcing beam 13 and the structural profile 11 compared conventional gap compensator like welding process.

Advantageously, a distance separating the reinforcing beam 13 from the structural profile 11 when the reinforcing beam 13 is in the assembled configuration C2, is inferior to 10 mm, preferentially inferior to 2 mm, and notably sensibly equal to 0 mm. In other words, the reinforcing beam 13 may be in contact with, or close to the structural profile 11 when the reinforcing beam 13 is in the assembled configuration C2. It is well understood that the reinforcing beam 13 is configured to fit in a length separating two opposite structural profiles 11 of the frame 2.

According to one embodiment, the distance separating the reinforcing beam 13 from the structural profile 11 when the reinforcing beam 13 is in the assembled configuration C2, is inferior to 5 mm, and preferentially inferior to 1 mm. Thus, fixing the reinforcing beam 13 with the structural profile 11 can be achieved without welding. Besides, using shorter gaps for assembling the reinforcing beam 13 with the structural profile 11 allows to have better resistance to crash performances. Indeed, direct welding between the reinforcing beam 13 and structural profiles 11 would require much tighter gap control and can over-constrain the frame 2 structure.

Referring to figure 5, the assembly 10 may further comprise at least one fixing element 36 configured to allow securing of the connecting node 30 to the structural profile 11. Thus, the mechanical strength of the link between the structural profile 11 and the connecting node 30 is improved. Said at least one fixing element 36 is generally configured to allow a reversible fixing of the connecting node 30 with the structural profile 11. Figure 5 illustrates a variant where the at least one fixing element 36 comprises a bolt 37 configured to be fixed to a blind rivet nut 38 provided in the structural profile 11. Said blind rivet nut may be placed in an inner wall of the structural profile 11. Said blind rivet nut may be a sealed blind rivet nut. This bolted connection ensures a proper support for load cases where the connecting node 30 is loaded in shear. Alternatively, each bolt 37 can be connected to the structural profile 11 through a threaded hole arranged through the structural profile 11 via a sealing element, such as a sealing ring. Thus, it is possible to secure the connecting node 30 to the structural profile 11 while maintaining leak tightness.

The arrangements described above make it possible to provide an assembly 10 for battery holder 1 where individual batteries can be bonded to the frame 2 of the battery holder 1 directly. Indeed, the fact that the connecting node 30 is inserted inside the connecting enclosure 15 allows both to have a strong connection between the side structural profile 11 and the reinforcing beam 13, and to increase the package space for batteries without increasing the overall internal perimeter of the frame 2.

## Claims

1. Assembly (10) for battery holder (1), the battery holder (1) comprising a frame (2) and a floor (3) delimiting between them a housing intended to receive all or part of a battery, the assembly (10) comprising :
- a structural profile (11) intended to form at least one part of the frame (2) of the battery holder (1), said structural profile (11) extending along a primary direction (X);
- a connecting node (30) secured to the structural profile (11), and abutting on the structural profile (11) along an interface surface (si30), said interface surface (si30) being generally plane, and sensibly parallel to the primary direction (X);
- a reinforcing beam (13) comprising at least one connecting enclosure (15) configured to allow the reinforcing beam (13) to slide relative to the connecting node (30) along a sliding direction (S), the reinforcing beam (13) being configured to vary configuration between a disassembled configuration (C1) wherein the reinforcing beam (13) is disjoint from the connecting node (30), and an assembled configuration (C2) wherein the connecting node (30) is at least partially inserted inside the connecting enclosure (15) of the reinforcing beam (13).

2. Assembly (10) according to claim 1, wherein the reinforcing beam (13) is extending along a secondary direction (Y) sensibly perpendicular to the primary direction (X), when the reinforcing beam (13) is in the assembled configuration (C2).

3. Assembly (10) according to any one of claim 1 or 2, wherein a distance separating the reinforcing beam (13) from the structural profile (11) when the reinforcing beam (13) is in the assembled configuration (C2), is inferior to 10 mm, preferentially inferior to 2 mm, and notably sensibly equal to 0 mm.

4. Assembly (10) according to any one of claim 1 to 3, wherein the connecting node (30) presents externally an external adhesion surface (se30), and wherein the reinforcing beam (13) presents internally an internal adhesion surface (si13) facing the external adhesion surface (se30) of the connecting node (30), the assembly (10) comprising further an adhesion element (20) disposed between said external adhesion surface (se30) and said internal adhesion surface (si13), said adhesion element (20) being configured to adhere the connecting node (30) to the reinforcing beam (13) at the level of the external adhesion surface (se30) and of the internal adhesion surface (si13), when the reinforcing beam (13) is in the assembled configuration (C2).

5. Assembly (10) according to any one of claim 1 to 4, wherein the reinforcing beam (13) comprises a connecting end portion (16) comprising at least two walls (17, 18) defining internally the connecting enclosure (15), said connecting end portion (16) being configured to allow the reinforcing beam (13) to slide relatively to the connecting node (30).

6. Assembly (10) according to claim 5, wherein the connecting end portion (16) presents internally, an abutment surface (s16) on which the connecting node (30) is configured to abut when the reinforcing beam (13) is in the assembled configuration (C2).

7. Assembly (10) according to claim 6, wherein the connecting node (30) presents a support surface (ss30) facing the abutment surface (s16) of the reinforcing beam (13), the connecting node (30) comprising at least one insertion corner (32) adjacent to said support surface (ss30), said at least one insertion corner (32) being roundish.

8. Assembly (10) according to any one of claim 5 to 7, wherein the at least two walls (17, 18) of the connecting end portion (16) comprises a central wall (17) and two opposite lateral side walls (18) extending from the central wall (17); each lateral side wall (18) comprising a proximal end (p18) attached to the central wall (17), and a distal end (d18) opposite to the proximal end (p18).

9. Assembly (10) according to claim 8, wherein a distance separating the two opposite side walls (18) at the level of the proximal ends (p18) is strictly inferior to a distance separating the two opposite side walls (18) at the level of the distal ends (d18).

10. Assembly (10) according to claim 9, wherein the connecting node (30) comprises two opposite adhesion faces facing the two opposite side walls (18) of the connecting end portion (16) of the reinforcing beam (13), a distance separating the two opposite adhesion faces at the level of the proximal ends (p18) is strictly inferior to a distance separating the two opposite adhesion faces at the level of the distal ends (d18).

11. Assembly (10) according to any one of claim 1 to 10, wherein the connecting node (30) is formed in an extruded profile.

12. Assembly (10) according to any one of claim 1 to 11, wherein at least one element chosen between the structural profile (11), the connecting node (30), and the reinforcing beam (13) is made from an aluminum alloy.

13. Assembly (10) according to any one of claim 1 to 12, comprising at least one fixing element (36) configured to allow securing of the connecting node (30) to the structural profile (11).

14. Assembly (10) according to claim 13, wherein the at least one fixing element (36) comprises a bolt (37) configured to be fixed to a blind nut (38) provided in the structural profile (11).

15. Battery holder (1) for a transport vehicle, the battery holder (1) comprising a frame (2) and a floor (3) delimiting between them a housing intended to receive all or part of a battery, said frame (2) comprising at least one assembly (10) according to any one of claim 1 to 14.

16. Electric or hybrid motorized transport vehicle comprising a battery holder (1) according to claim 15.
